# EUROPÄISCHE PATENTSCHRIFT

(11) **EP 1 329 871 B1**
(45) Veröffentlichungstag und Bekanntmachung des Hinweises auf die Patenterteilung: **24.02.2016**
(21) Anmeldenummer: 02027470.0
(22) Anmeldetag: 10.12.2002
(51) Int. Cl.: G09G 3/28

(54) **Verfahren und Vorrichtung zur Verbesserung der Bildqualität dunkler Bildbereiche bei einer digitalen Bildanzeige**
Method and apparatus for the improvement of image quality in darker areas of a digital display
Méthode et dipositif d'amélioration de la qualité dans les zones sombres des images d'un afficheur numérique

(30) Priorität: 15.12.2001 DE 10161718
(43) Veröffentlichungstag der Anmeldung: 23.07.2003
(73) Patentinhaber: Grundig Multimedia AG, 6362 Stansstad (CH)
(72) Erfinder: Fischbeck, Udo, 90766 Fürth (DE); Merhof, Gerhard, 91054 Erlangen (DE); Stracke, Jürgen, 90449 Nürnberg (DE); Valek, Tomas, 90765 Fürth (DE)
(74) Vertreter: Louis Pöhlau Lohrentz

(56) Entgegenhaltungen:
- EP-A- 0 656 616
- EP-A- 0 788 087
- EP-A- 0 994 457

## Beschreibung

Die Erfindung betrifft ein Verfahren und eine Vorrichtung zur Verbesserung der Bildqualität dunkler Bildbereiche bei einer digitalen Bildanzeigeeinheit, beispielsweise einem Plasmadisplay.

Plasmadisplays sind bereits bekannt. Deren Aufbau und Funktionsweise sind beispielsweise in dem Aufsatz "Plasma-Displays in Fernseh- und Multimedia-Endgeräten" von H. Kraus, veröffentlicht in der Zeitschrift FERNSEH- UND KINO-TECHNIK, 52. Jahrgang, Nr. 11/1998, Seiten 662 - 668, beschrieben. Das dort gezeigte Plasmadisplay besteht aus zwei parallelen Glasflächen, deren Zwischenraum mit einem Edelgasgemisch gefüllt ist. Die Frontscheibe des Displays ist innen mit transparenten Steuerelektroden benetzt. In den Zwischenräumen befinden sich Abstandsstreifen und darüber eine Schutzschicht. Die hintere Scheibe trägt die Adresselektroden und für jeden Pixel eine rote, eine grüne und eine blaue Phosphorschicht, die durch dünne Stege getrennt sind. Der Aufbau eines Pixels besteht folglich immer aus drei Farbstoffzellen. Mittels einer Ansteuerelektronik kann an die Adresselektroden und über X- und Y-Busleitungen Spannung an die Elektroden einer jeden einzelnen Zelle angelegt werden. Die Adresselektrode dient zum Vorinitialisieren einer Zelle, die im nächsten Zyklus leuchten soll. Eine nicht adressierte Zelle bleibt im folgenden Zyklus dunkel. Die an den Busleitungen anliegende Spannung löst die elektrische Oberflächenentladung auf der Isolierschicht aus. Dabei geht das Gas in den Plasmazustand über, um UV-Licht zu erzeugen, das die Phosphorschicht der einzelnen Zellen zum Leuchten bringt.

Aus der DE 100 09 858 A1 sind ein Verfahren und eine Vorrichtung zur Verbesserung des Kontrasts einer pulsbreitengesteuerten Bildanzeigevorrichtung, beispielsweise eines Plasmadisplays, bekannt. Dort werden mittels einer Steuereinrichtung in Abhängigkeit von der ermittelten Helligkeit eines darzustellenden Bildes die maximal zulässigen Leuchtdauern in den einzelnen Teilzeitintervallen vorgegeben. Bei Änderungen der erfassten Helligkeit erfolgt eine Veränderung der maximal zulässigen Leuchtdauer derart, dass Teilzeitintervalle mit niedriger Wertigkeit geringeren Änderungen der maximal zulässigen Leuchtdauer unterliegen als Teilzeitintervalle mit höherer Wertigkeit.

In der DE 100 61 451 ist eine Vorrichtung zur Verarbeitung von RGB-Signalen bei einem digital angesteuerten Display beschrieben, beispielsweise einem Plasmadisplay. Die Vorrichtung weist eine Schaltung zur Entzerrung von vorverzerrten RGB-Signalen und ein Display auf. Zwischen der Schaltung zur Entzerrung und dem Display ist weiterhin eine Korrektureinheit vorgesehen, die zur Reduzierung von Farbübersättigungen dient.

In der DE 101 27 132 sind ein Verfahren und eine Vorrichtung zur Darstellung von gammavorverzerrten RGB-Signalen mittels eines digital angesteuerten Displays beschrieben. Dabei wird das für eine Bilddarstellung zur Verfügung stehende Zeitintervall in aufeinanderfolgende gewichtete Teilzeitintervalle aufgeteilt und die den Bildpunkten des darzustellenden Bildes zugehörigen Helligkeitssignale durch Umwandlung in den Teilzeitintervallen zugeordnete Aktivierungssequenzen erzeugt. Die Dauer der Teilzeitintervalle wird derart gewählt, dass die mittels des Displays dargestellten RGB-Signale gammaentzerrt sind.

EP 0 656 616 A1 lehrt eine Technik, den sichtbaren Dynamikbereich eines digitalen Displays zu verbessern. Die in dunklen Bildbereichen aufgrund der Quantisierung im Rahmen einer Gammaentzerrung eines senderseitig vorverzerrten Bildsignals erfolgte Verringerung der Anzahl der Helligkeitsstufen soll durch verschiedene Verfahren kompensiert werden. Zum einen wird vorgeschlagen, den gewünschten Helligkeitswert durch die zeitliche Mittelung verschiedener Helligkeitswerte, die den möglichen Quantisierungsstufen zugeordnet und in Umrechungstafeln enthalten sind, darzustellen. Die Auswahl der Tafeln wird mittels eines Zählers und gegebenenfalls zusätzlich durch einen diesen steuernden Zufallsgenerator ausgewählt. Außerdem wird vorgeschlagen, einen gewünschten Helligkeitswert, insbesondere bei bewegten Bildern, durch die sowohl zeitliche als auch räumliche Mittelung verschiedener Helligkeitsstufen zu dem gewünschten Helligkeitswert darzustellen.

Lineare 8-Bit-Displays, wie beispielsweise Plasmadisplays oder LCD's, haben in dunklen Bildbereichen eine sichtbare Abstufung im Helligkeitsverlauf. Insbesondere dann, wenn eine durchgängige digitale Signalverarbeitung vom Farbdecoder bis zum Display erfolgt, tritt diese Abstufung für das menschliche Auge störend in Erscheinung. Diese Abstufung ist darauf zurückzuführen, dass bei den bekannten Displays im Rahmen einer Gammaentzerrung durch ein Quantisieren auf 8 Bits Helligkeitsstufen verloren gehen. So entsteht beispielsweise aus vier Helligkeitsstufen durch die Quantisierung, im unteren Teil der Kurve, nur eine einzige Helligkeitsstufe.

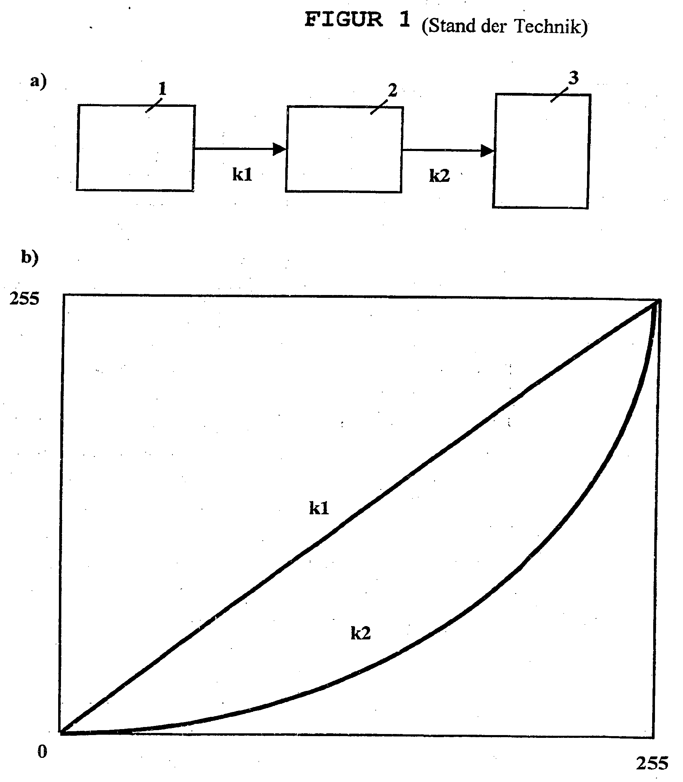

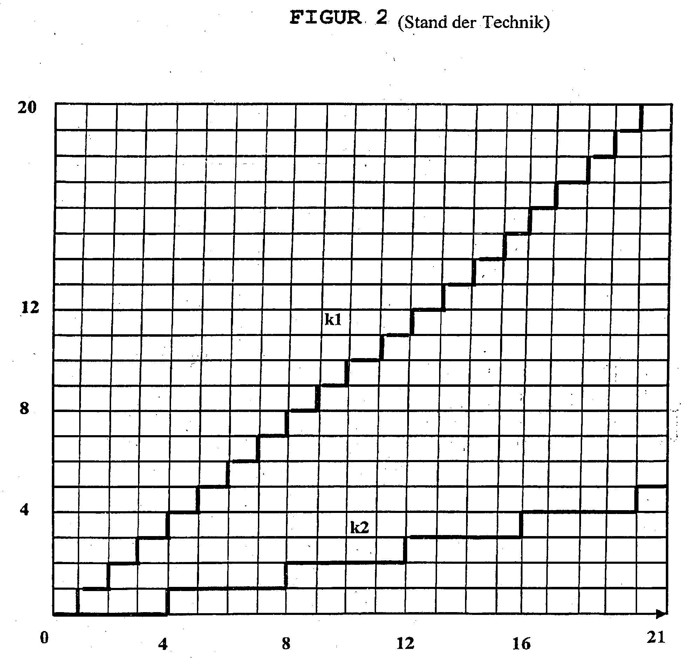

Dies ist in den Figuren 1 und 2 veranschaulicht. Die Figur 1 a zeigt in Form eines vereinfachten Blockschaltbildes einen Farbdecoder 1, der ein digitales Videosignal k1 zur Verfügung stellt. Dieses wird einem Gammaentzerrer 2 zugeführt, dessen Aufgabe darin besteht, das senderseitig gammavorverzerrte Videosignal zu entzerren. Das Ausgangssignal k2 des Gammaentzerrers 2 wird einem Plasmadisplay 3 zugeführt und auf diesem angezeigt. Die Figur 1b veranschaulicht das grundsätzliche Verhalten des Gammaentzerrers 2. Ein lineares Eingangssignal k1 des Gammaentzerrers 2 wird im Gammaentzerrer derart entzerrt, dass am Ausgang des Gammaentzerrers das Signal k2 entsteht, welches dem Display 3 zugeführt wird. In der Figur 2 ist ein Teilbereich von Figur 1 b vergrößert dargestellt. Es ist ersichtlich, dass aus vier Helligkeitsstufen des Eingangssignals k1 des Gammaentzerrers eine Helligkeitsstufe des Ausgangssignals k2 des Gammaentzerrers entsteht.

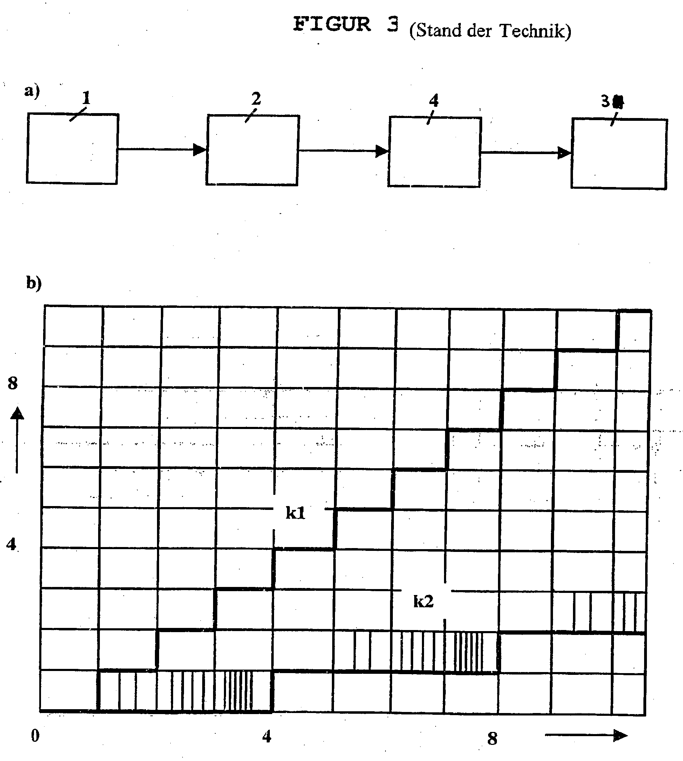

Um die störende Wirkung der genannten Abstufung zu verringern, ist es bereits bekannt, bei der im Rahmen der Gammaentzerrung erfolgenden Quantisierung zusätzliche Bits zu berechnen und diese in Form eines "Ditherns" darzustellen. Dies ist in der Figur 3 veranschaulicht. Diese zeigt in Form eines vereinfachten Blockschaltbildes einen Farbdecoder 1, der ein digitales Videosignal k1 zur Verfügung stellt. Dieses wird einem Gammaentzerrer 2 zugeführt, dessen Aufgabe darin besteht, das senderseitig gammavorverzerrte Videosignal zu entzerren. Das Ausgangssignal des Gammaentzerrers 2 wird einer Ditherschaltung 4 zugeführt. Deren Ausgangssignal wird an das Display 3 weitergeleitet und auf diesem angezeigt.

Die Figur 3b veranschaulicht das grundsätzliche Verhalten der gezeigten Schaltung. Ein lineares Eingangssignal k1 des Gammaentzerrers 2 wird im Gammaentzerrer entzerrt. Die im Rahmen der Gammaentzerrung zusätzlich berechneten Bits werden in der Ditherschaltung 4 in gewichtete Rauschgeneratorsignale umgesetzt, die dem für das Display 3 vorgesehenen 8-Bit-Signal derart überlagert werden, wie es anhand des unteren Kurvenverlaufes k2 in Figur 3b veranschaulicht ist. Beim Betrachten eines derartigen Bildes integriert das menschliche Auge die generierten Signale. Dabei entstehen für das menschliche Auge zusätzliche Helligkeitsstufen, so dass die als störend empfundenen großen Abstufungen nicht mehr vorliegen.

Die vorstehend beschriebene Lösung beruht folglich darauf, dass im Gammaentzerrer ein Quantisierer verwendet wird, der mehr Bits berechnet als eigentlich für das Display vorgesehen sind. Diese Lösung ist deshalb nachteilig, weil sie besondere Quantisierer erfordert, die von den am Markt verbreiteten und deshalb in großer Stückzahl erhältlichen Quantisierern abweichen. Dies ist für den Hersteller von Plasmadisplays mit erhöhten Produktionskosten verbunden, da die benötigen Quantisierer Sonderbausteine sind, die erheblich teurer sind als übliche Quantisierer.

Die Aufgabe der Erfindung besteht darin, einen Weg aufzuzeigen, wie bei einer digitalen Bildanzeigeeinheit unter Beibehaltung einer Verwendung üblicher Quantisierer in dunklen Bildbereichen ein Auftreten von störenden Abstufungen im Helligkeitsverlauf vermieden werden kann.

Diese Aufgabe wird durch ein Verfahren mit den im Anspruch 1 angegebenen Merkmalen und eine Vorrichtung mit den im Anspruch 9 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass bei digitalen Displays, beispielsweise linearen 8-Bit-Plasmadisplays oder LCD's in dunklen Bildbereichen keine störenden Abstufungen im Helligkeitsverlauf auftreten und dies erreicht werden kann, obwohl herkömmliche, am Markt weit verbreitete und deshalb preisgünstige Quantisierer, insbesondere 8-Bit-Quantisierer, verwendet werden. Gemäß der Erfindung werden in dunklen Bildbereichen für das menschliche Auge zusätzliche Helligkeitszwischenstufen durch ein gezieltes Einfügen von Rauschsignalen erzeugt. Dies kann vor dem Gammaentzerrer unter Verwendung eines Rauschgenerators oder zwischen dem Gammaentzerrer und dem Display durch Verwendung einer Ditherschaltung geschehen.

Weitere vorteilhafte Eigenschaften der Erfindung ergeben sich aus der Erläuterung der Erfindung anhand der Figuren. Es zeigt:
- Figur 1: ein Blockschaltbild und ein Diagramm zur Erläuterung der vorbekannten Gammaentzerrung bei einem Plasmadisplay,
- Figur 2: eine vergrößerte Darstellung eines Ausschnitts aus dem in der Figur 1 gezeigten Diagramm,
- Figur 3: ein Blockschaltbild und ein Diagramm zur Erläuterung einer bekannten Vorgehensweise zur Verbesserung der Bildqualität dunkler Bildbereiche bei einem Plasmadisplay,
- Figur 4: ein Blockschaltbild und ein Diagramm zur Erläuterung eines ersten Ausführungsbeispiels für die Erfindung,
- Figur 5: ein Blockschaltbild und ein Diagramm zur Erläuterung eines zweiten Ausführungsbeispiels für die Erfindung, und
- Figur 6: ein Blockschaltbild und ein Diagramm zur Erläuterung eines dritten Ausführungsbeispiels für die Erfindung.

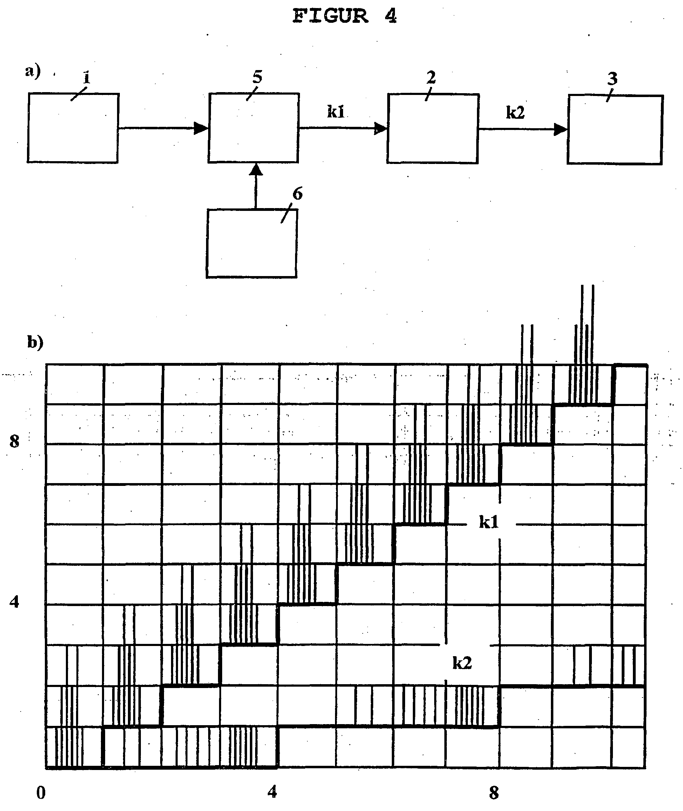

Die Figur 4 zeigt ein Blockschaltbild und ein Diagramm zur Erläuterung eines ersten Ausführungsbeispiels für die Erfindung. Gemäß diesem Ausführungsbeispiel werden die vom Farbdecoder 1 gelieferten Videosignale einer Überlagerungsschaltung 5 zugeführt. Dort wird den Videosignalen ein in einem Rauschgenerator 6 erzeugtes Rauschsignal überlagert. Das Ausgangssignal k1 der Überlagerungsschaltung 5 wird im Gammaentzerrer 2 entzerrt. Das Ausgangssignal k2 des Gammaentzerrers 2 wird dem Plasmadisplay 3 zugeführt und dort angezeigt.

Bei dieser Ausführungsform wird das vom Farbdecoder 1 gelieferte Videosignal vor dem Gammaentzerrer 2 von einem Rauschsignal überlagert. Als Gammaentzerrer 2 kann ein herkömmlicher Gammaentzerrer verwendet werden, welcher einen 8-Bit-Quantisierer aufweist. Das dem Videosignal überlagerte Rauschen hat in etwa gleich verteilte Amplituden-Wahrscheinlichkeiten, so dass beim Quantisieren die Wahrscheinlichkeit des Überschreitens der jeweiligen Quantisierungsgrenze abhängig ist von der Helligkeitsstufung vor der Gammaentzerrung. Man erhält durch diese Überlagerung des Videosignals mit einem Rauschsignal ein durch das Rauschen gedithertes Signal. Es wird dem Videosignal ein künstlichem Rauschen entsprechendes Zufallsignal überlagert, welches Amplituden-Wahrscheinlichkeiten von jeweils 25% für die Amplituden 0, 1, 2 und 3 hat.

Dies ist in der Figur 4b veranschaulicht, in welcher mit k1 das Ausgangssignal der Überlagerungsschaltung 5 und mit k2 das Eingangssignal des Plasmadisplays 3 bezeichnet ist. Das Signal k1 ist das vom Zufallsrauschen überlagerte lineare Ausgangssignal des Farbdecoders 1, wie es am Eingang des Gammaentzerrers 2 vorliegt. Das Signal k2 ist das gammaentzerrte Signal, welches dem Display 3 zugeführt wird.

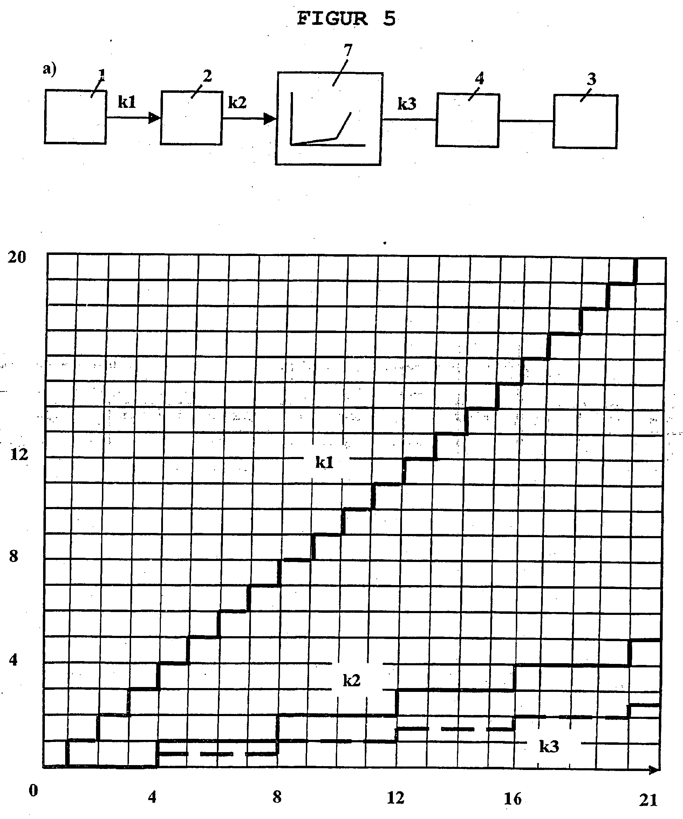

Die Figur 5 zeigt ein Blockschaltbild und ein Diagramm zur Erläuterung eines zweiten Ausführungsbeispiels für die Erfindung. Gemäß diesem Ausführungsbeispiel werden die vom Farbdecoder 1 gelieferten Videosignale im Gammaentzerrer 2 gammaentzerrt. Der Gammaentzerrer 2 ist ein handelsüblicher Gammaentzerrer, welcher einen 8-Bit-Quantisierer aufweist. Das Ausgangssignal k2 des Gammaentzerrers 2 wird einer Nichtlinearität 7 zugeführt. Das Ausgangssignal k3 der Nichtlinearität 7 wird an eine Ditherschaltung 4 weitergeleitet, deren Ausgang mit dem Plasmadisplay 3 verbunden ist.

Bei dieser Ausführungsform wird die Stufigkeit in dunklen Bildbereichen dadurch vermindert, dass hinter dem Gammaentzerrers 2 eine Nichtlinearität 7 angeordnet ist, die in dunklen Bildbereichen die Höhe der im Signal k2 auftretenden Stufen halbiert und für hellere Bildbereiche wieder einen linearen Verlauf des Signals sicherstellt. Die Halbierung der Höhe der Stufen des Signals k2 für dunkle Bildbereiche ist durch einen Vergleich der Signalverläufe k2 und k3 ersichtlich. Durch diese Halbierung der Stufenhöhe bzw. durch diese Kompression um den Faktor 2 gewinnt man eine Zwischenstufe, die unter Verwendung eines Dithervorganges dargestellt werden kann. Eine derartige Abbildung wird in bestimmten Grenzen vom menschlichen Auge als nicht störend empfunden. Sie wirkt sich in etwa wie eine stärkere Gammaentzerrung aus.

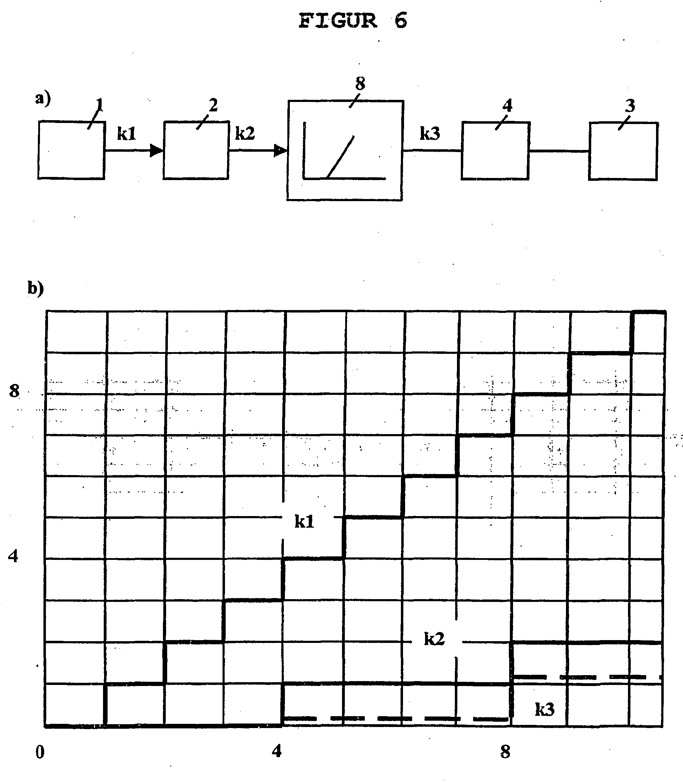

Die Figur 6 zeigt ein Blockschaltbild und ein Diagramm zur Erläuterung eines dritten Ausführungsbeispiels für die Erfindung. Dieses Ausführungsbeispiel unterscheidet sich von dem in der Figur 5 gezeigten Ausführungsbeispiel lediglich durch eine andere Ausgestaltung der hinter dem Gammaentzerrer 2 angeordneten Nichtlinearität 8. Diese berücksichtigt, dass bei bekannten Plasmadisplays vom menschlichen Auge der Helligkeitssprung von schwarz zur ersten Graustufe als besonders störend empfunden wird. Um diesem Umstand gerecht zu werden, werden im Vergleich zu Figur 5 die ersten Graustufen nach unten verschoben, so dass der auftretende Helligkeitssprung kleiner wird. Beispielsweise beträgt der erste durch einen Dithervorgang dargestellte Wert nur 0,25, der zweite Wert liegt bei 1,25, der dritte Wert bei 2,25, usw.. Dies ist aus einem Vergleich der Signalverläufe k2 und k3 in der Figur 6b ersichtlich.

Bei den in den Figuren 5 und 6 gezeigten Ausführungsbeispielen wird die Bildwiedergabe in dunklen Bildbereichen folglich durch Maßnahmen erreicht, die zwischen dem Gammaentzerrer 2 und Plasmadisplay 3 vorgenommen werden. Der Gammaentzerrer 2 kann einen herkömmlichen Quantisierer verwenden, so dass im Rahmen der Gammaentzerrung eine Quantisierung auf 8 Bits erfolgen kann, bei welcher ein Informationsverlust auftritt. Die grobe Stufigkeit der Helligkeitsübergänge in dunklen Bildbereichen wird durch die Erzeugung zusätzlicher Helligkeits-Zwischenstufen mittels eines Dithervorganges verringert, wobei diese zusätzlichen Helligkeitszwischenstufen zwischen den durch 8 Bits darstellbaren Stufen liegen.

Eine vorteilhafte Weiterbildung der Erfindung besteht darin, das Bildsignal zwischen dem Gammaentzerrer 2 und dem Plasmadisplay 3 zusätzlich über ein horizontales und/oder vertikales Tiefpassfilter zu leiten. Dadurch werden die im Signal auftretenden Übergange verschliffen. Das Ergebnis dieser Filterung liefert mehr als 8 Bits. Die erhaltene zusätzliche Information kann durch einen Dithervorgang dargestellt werden.

Alternativ zur vorgenannten Weiterbildung können die einzelnen Stufen im 8-Bit-Signal durch künstliche Übergänge ersetzt werden, was in einfacher Weise realisierbar ist. Dabei wird der Übergang von einer Helligkeitsstufe zur nächsten mittels eines Stufendetektors detektiert. Dieser steuert einen Zähler an. Beim Erreichen vorgegebener Zählwerte werden beidseits der jeweils detektierten Stufe eine oder mehrere Zwischenstufen platziert. Diese Zwischenstufen müssen nicht symmetrisch zur detektierten Stufe liegen. Es ist in technischer Hinsicht einfacher realisierbar, die detektierte Stufe durch eine ansteigende bzw. fallende feinere Treppe zu ersetzen, die erst nach einer detektierten Stufe anfängt. Dies erspart eine Verwendung von Verzögerungsgliedern.

Gemäß der vorliegenden Erfindung werden nach alledem in dunklen Bildbereichen insbesondere eines Plasmadisplays auftretende, als störend empfundene Abstufungen im Helligkeitsverlauf dadurch vermieden, dass trotz Verwendung eines Gammaentzerrers mit einem üblichen 8-Bit-Quantisierer durch eine Generierung zusätzlicher Helligkeits-Zwischenstufen zwischen den durch 8 Bits darstellbaren Helligkeitsstufen die grobe Stufigkeit der Helligkeitsübergänge beseitigt wird. Dies geschieht bei einer Ausführungsform der Erfindung vor dem Gammaentzerrer durch Verwendung eines Rauschgenerators, dessen Ausgangssignal dem Eingang-Videosignal überlagert wird. Bei weiteren Ausführungsformen der Erfindung wird dies dadurch erreicht, dass zwischen dem Gammaentzerrer und dem Plasmadisplay eine Nichtlinearität und eine Ditherschaltung zum Einsatz kommen.

### Bezugszeichenliste:

- 1: Farbdecoder
- 2: Gammaentzerrer
- 3: Plasmadisplay
- 4: Ditherschaltung
- 5: Überlagerungsschaltung
- 6: Rauschgenerator
- 7: Nichtlinearität
- 8: Nichtlinearität

## Patentansprüche

1. Verfahren zur Verbesserung der Bildqualität dunkler Bildbereiche bei einer digitalen Bildanzeigeeinheit, bei welchem vor der Bildanzeigeeinheit eine Gammaentzerrung eines senderseitig vorverzerrten Bildsignals erfolgt, wobei die Anzahl der darstellbaren Helligkeitsstufen von der Bitbreite eines im Rahmen der Gammaentzerrung erfolgenden Quantisierungsvorganges abhängig ist,
**dadurch gekennzeichnet, dass**
vor oder hinter der Gammaentzerrung zusätzliche Helligkeits-Zwischenstufen gebildet werden und dass das auf der Bildanzeigeeinheit darzustellende Bildsignal vor dem Gammaentzerrer von einem Rauschsignal überlagert wird.

2. Verfahren nach Anspruch 1,
**dadurch gekennzeichnet, dass**
das Rauschsignal in etwa gleich verteilte Amplituden-Wahrscheinlichkeiten aufweist.

3. Verfahren nach Anspruch 1,
**dadurch gekennzeichnet, dass**
das auf der Bildanzeigeeinheit darzustellende Bildsignal zwischen dem Gammaentzerrer und der Bildanzeigeeinheit einem Dithervorgang unterworfen wird.

4. Verfahren nach Anspruch 3,
**dadurch gekennzeichnet, dass**
das auf der Bildanzeigeeinheit darzustellende Bildsignal zwischen dem Gammaentzerrer und dem Dithervorgang einer nichtlinearen Verarbeitung unterworfen wird.

5. Verfahren nach Anspruch 3 oder 4,
**dadurch gekennzeichnet, dass**
im darzustellenden Signal auftretende Helligkeitsübergänge detektiert werden und in Abhängigkeit davon zusätzliche Helligkeitszwischenstufen gebildet werden.

6. Verfahren nach Anspruch 5,
**dadurch gekennzeichnet, dass**
die zusätzlichen Helligkeitszwischenstufen beidseits des detektierten Helligkeitsüberganges gebildet werden.

7. Verfahren nach Anspruch 5,
**dadurch gekennzeichnet, dass**
die zusätzlichen Helligkeitszwischenstufen in Form einer Treppe gebildet werden, deren Beginn bei einem detektierten Helligkeitsübergang liegt.

8. Vorrichtung zur Verbesserung der Bildqualität dunkler Bildbereiche bei einer digitalen Bildanzeigeeinheit, welche Vorrichtung einen Gammaentzerrer und ein Display aufweist,
**dadurch gekennzeichnet, dass**
die Vorrichtung weiterhin vor oder hinter dem Gammaentzerrer (2) Schaltungsmittel zur Bildung zusätzlicher Helligkeitszwischenstufen aufweist und dass sie vor dem Gammaentzerrer (2) eine Überlagerungsschaltung (5) aufweist, welche einen ersten Eingang für das darzustellende Bildsignal, einen zweiten Eingang für ein von einem Rauschgenerator (6) erzeugtes Rauschsignal und einen Ausgang zum Gamma entzerrer für das überlagerte Bildsignal hat.

9. Vorrichtung nach Anspruch 8,
**dadurch gekennzeichnet, dass**
der Rauschgenerator (6) zur Erzeugung eines Rauschsignals mit in etwa gleich verteilten Amplituden-Wahrscheinlichkeiten vorgesehen ist.

10. Vorrichtung nach Anspruch 8,
**dadurch gekennzeichnet, dass**
sie eine zwischen dem Gammaentzerrer (2) und dem Display (3) angeordnete Ditherschaltung (4) aufweist.

11. Vorrichtung nach Anspruch 10,
**dadurch gekennzeichnet, dass**
sie eine zwischen dem Gammaentzerrer (2) und der Ditherschaltung (4) angeordnete Nichtlinearität (7, 8) aufweist.

12. Vorrichtung nach Anspruch 8, 10 oder 11,
**dadurch gekennzeichnet, dass**
sie einen Detektor für im Signal auftretende Helligkeitsübergänge und eine mit diesem Detektor verbundene Schaltung zur Generierung zusätzlicher Helligkeitszwischenstufen aufweist.

13. Vorrichtung nach Anspruch 12,
**dadurch gekennzeichnet, dass**
die mit dem Detektor verbundene Schaltung einen Zähler enthält.

14. Vorrichtung nach Anspruch 12 oder 13,
**dadurch gekennzeichnet, dass**
die Schaltung zur Generierung zusätzlicher Helligkeitszwischenstufen diese beidseits des detektierten Helligkeitsüberganges bildet.

15. Vorrichtung nach Anspruch 12 oder 13,
**dadurch gekennzeichnet, dass**
die Schaltung zur Generierung zusätzlicher Helligkeitszwischenstufen diese in Form einer Treppe bildet, deren Beginn bei einem detektierten Helligkeitsübergang liegt.

## Claims

1. Method for the improvement of the image quality of dark image regions in a digital image display unit, in which a gamma equalisation of a transmitter-side predistorted image signal occurs in front of the image display unit, wherein the number of displayable brightness levels is dependent on the bit width of a quantisation process occurring as part of the gamma equalisation,
**characterised in that**
additional brightness intermediate levels are formed in front of or behind the gamma equalisation and the image signal to be displayed on the image display unit is superimposed by a noise signal in front of the gamma equaliser.

2. Method according to claim 1,
**characterised in that**
the noise signal has amplitude probabilities which are approximately equally distributed.

3. Method according to claim 1,
**characterised in that**
the image signal to be displayed on the image display unit is subjected to a dither process between the gamma equaliser and the image display unit.

4. Method according to claim 3,
**characterised in that**
the image signal to be displayed on the image display unit is subjected to non-linear processing between the gamma equaliser and the dither process.

5. Method according to claim 3 or 4,
**characterised in that**
brightness transitions occurring in the signal to be displayed are detected and, depending on this, additional brightness intermediate levels are formed.

6. Method according to claim 5,
**characterised in that**
the additional brightness intermediate levels are formed on both sides of the detected brightness transition.

7. Method according to claim 5,
**characterised in that**
the additional brightness intermediate levels are formed in the form of a staircase, the beginning of which is in a detected brightness transition.

8. Device for the improvement of the image quality of dark image regions in a digital image display unit, said device having a gamma equaliser and a display,
**characterised in that**
the device furthermore has circuit means for the formation of additional brightness intermediate levels in front of or behind the gamma equaliser (2) and it has a superimposition circuit (5) in front of the gamma equaliser (2), said superimposition circuit having a first input for the image signal to be displayed and a second input for a noise signal generated by a noise generator (6) and an output to the gamma equaliser for the superimposed image signal.

9. Device according to claim 8,
**characterised in that**
the noise generator (6) for the generation of a noise signal is provided with approximately equally distributed amplitude probabilities.

10. Device according to claim 8,
**characterised in that**
it has a dither circuit (4) arranged between the gamma equaliser (2) and the display (3).

11. Device according to claim 10,
**characterised in that**
it has a non-linearity (7, 8) arranged between the gamma equaliser (2) and the dither circuit (4).

12. Device according to claim 8, 10 or 11,
**characterised in that**
it has a detector for brightness transitions occurring in the signal and a circuit connected to this detector for the generation of additional brightness intermediate levels.

13. Device according to claim 12,
**characterised in that**
the circuit connected to the detector contains a counter.

14. Device according to claim 12 or 13,
**characterised in that**
the circuit for the generation of additional brightness intermediate levels forms these on both sides of the detected brightness transition.

15. Device according to claim 12 or 13,
**characterised in that**
the circuit for the generation of additional brightness intermediate levels forms these in the form of a staircase, the beginning of which is in a detected brightness transition.

## Revendications

1. Procédé destiné à améliorer la qualité d'image de zones d'image sombres sur une unité numérique d'affichage d'images, dans lequel une égalisation gamma d'un signal d'image ayant subi une prédistorsion du côté de l'émetteur est réalisée avant l'unité d'affichage d'images, le nombre de degrés de luminosité pouvant être représentés dépendant de la largeur de bit d'une opération de quantification réalisée dans le cadre de l'égalisation gamma,
**caractérisé**
**en ce que** des degrés intermédiaires de luminosité supplémentaires sont formés avant ou après l'égalisation gamma et en ce que le signal d'image à représenter sur l'unité d'affichage d'images est recouvert avant l'égaliseur gamma par un signal de bruit.

2. Procédé selon la revendication 1,
**caractérisé**
**en ce que** le signal de bruit présente des probabilités d'amplitudes réparties de façon essentiellement uniforme.

3. Procédé selon la revendication 1,
**caractérisé**
**en ce que** le signal d'image à représenter sur l'unité d'affichage d'images est soumis à une opération de tramage entre l'égaliseur gamme et l'unité d'affichage d'images.

4. Procédé selon la revendication 3,
**caractérisé**
**en ce que** le signal d'image à représenter sur l'unité d'affichage d'images est soumis à un traitement non linéaire entre l'égaliseur gamma et l'opération de tramage.

5. Procédé selon la revendication 3 ou 4,
**caractérisé**
**en ce que** les transitions de luminosité survenant dans le signal à représenter sont détectées et des degrés intermédiaires de luminosité supplémentaires sont formés en fonction de cela.

6. Procédé selon la revendication 5,
**caractérisé**
**en ce que** les degrés intermédiaires de luminosité supplémentaires sont formés des deux côtés de la transition détectée dans la luminosité.

7. Procédé selon la revendication 5,
**caractérisé**
**en ce que** les degrés intermédiaires de luminosité supplémentaires sont formés sous la forme d'un escalier, dont le début se situe au niveau d'une transition détectée dans la luminosité.

8. Dispositif destiné à améliorer la qualité d'image de zones d'image sombres sur une unité numérique d'affichage d'images, lequel dispositif présente un égaliseur gamma et un écran,
**caractérisé**
**en ce que** le dispositif présente en outre, avant ou après l'égaliseur gamma (2), des moyens de commutation permettant de former des degrés intermédiaires de luminosité supplémentaires et en ce qu'il présente avant l'égaliseur gamma (2) un circuit de superposition (5) qui comprend une première entrée pour le signal d'image à représenter, une deuxième entrée pour un signal de bruit produit par un générateur de bruit (6) et une sortie vers l'égaliseur gamma pour le signal d'image recouvert.

9. Dispositif selon la revendication 8,
**caractérisé**
**en ce que** le générateur de bruit (6) est prévu avec des probabilités d'amplitudes réparties de façon essentiellement uniforme en vue de la production d'un signal de bruit.

10. Dispositif selon la revendication 8,
**caractérisé**
**en ce qu'**il présente un circuit de tramage (4) agencé entre l'égaliseur gamma (2) et l'écran (3).

11. Dispositif selon la revendication 10,
**caractérisé**
**en ce qu'**il présente une non-linéarité (7, 8) agencée entre l'égaliseur gamma (2) et le circuit de tramage (4).

12. Dispositif selon la revendication 8, 10 ou 11,
**caractérisé**
**en ce qu'**il présente un détecteur pour des transitions de luminosité survenant dans le signal et un circuit relié avec ce détecteur pour la production de degrés intermédiaires de luminosité supplémentaires.

13. Dispositif selon la revendication 12,
**caractérisé**
**en ce que** le circuit relié avec le détecteur comprend un compteur.

14. Dispositif selon la revendication 12 ou 13,
**caractérisé**
**en ce que** le circuit destiné à produire des degrés intermédiaires de luminosité supplémentaires forme ces degrés des deux côtés de la transition détectée dans la luminosité.

15. Dispositif selon la revendication 12 ou 13,
**caractérisé**
**en ce que** le circuit destiné à produire des degrés intermédiaires de luminosité supplémentaires forme ces degrés sous la forme d'un escalier, dont le début se situe au niveau d'une transition détectée dans la luminosité.
